Europäisches Patentamt

European Patent Office

Office européen des brevets

(11) Numéro de publication: **0 228 970**
**A1**

# (12) DEMANDE DE BREVET EUROPEEN

(21) Numéro de dépôt: 86402958.2

(22) Date de dépôt: 30.12.86

(51) Int. Cl.⁴: **C 12 G 1/02**

(30) Priorité: 07.01.86 FR 8600115

(43) Date de publication de la demande:
15.07.87 Bulletin 87/29

(84) Etats contractants désignés:
AT CH DE ES GR IT LI

(71) Demandeur: **PEDIA, Société dite,**
**4, rue de la Michodière**
**F-75002 Paris (FR)**

(72) Inventeur: **Chauvet, Serge**
**Sauterne**
**F-33210 Langon (FR)**

**Sudraud, Pierre**
**Preignac**
**F-33210 Langon (FR)**

**Jouan, Thierry**
**7 route de Pontivy**
**F-56160 Guemene (FR)**

(74) Mandataire: **Rochery, Marc Henri**
**Société Internationale 19, rue de la Paix**
**F-75002 Paris (FR)**

(54) Procédé d'obtention de mout ou jus concentre.

(57) Procédé de sélection et d'enrichissement des moûts par congélation des baies.

Selon l'invention. le procédé consiste à congeler les baies à une température choisie. notamment comprise entre -6 C et -15 C et à les pressurer à l'état congelé pour obtenir un jus enrichi. notamment en sucre.

L'invention s'applique particulièrement à l'obtention des moûts de raisins. pour l'élaboration des vins.

EP 0 228 970 A1

**Description**

## PROCEDE D'OBTENTION DE MOUT OU JUS CONCENTRE

L'invention se rapporte à l'obtention de moûts, notamment les moûts de raisin, pour l'élaboration des vins et plus particulièrement les vins de qualité. L'invention concerne principalement un traitement approprié des baies et fruits par le froid, pour l'élaboration des moûts, dans le but de les enrichir naturellement et/ou de sauver une récolte compromise; elle permet aussi la production de jus de fruits enrichis et concentrés aromatiques naturels.

On sait que pour la viticulture, les conditions atmosphériques pendant l'année et tout particulièrement pendant les semaines qui précèdent les vendanges, déterminent pour beaucoup l'abondance et la qualité du millésime. Plusieurs circonstances défavorables peuvent se présenter. A titre d'exemple, les viticulteurs spécialisés dans la production des vins blancs liquoreux doivent attendre la surmaturation des raisins. Si les conditions atmosphériques sont favorables, on aboutit normalement à un début de surmaturation des raisins (pourriture noble) accompagnée d'une dessication partielle des raisins. Cette surmaturation se déroule à une période avancée de la saison où les précipitations atmosphériques sont plus fréquentes. Des pluies trop abondantes peuvent faire que les raisons surmûris se saturent d'eau de pluie. Les viticulteurs sont alors obligés d'attendre le retour éventuel du beau temps avant d'entreprendre les vendanges. Si cela ne se produit pas à temps, la vendange perd de sa qualité au point parfois de ne plus être utilisable.

Plus généralement, lorsque les vendanges sont insuffisamment riches, les viticulteurs des crûs d'appellation risquent, certaines années, de ne pouvoir produire un vin de qualité suffisante, c'est-à-dire dont les caractéristiques répondent naturellement à celles de l'appellation. Ils ont alors recours, dans certaines limites, à des expédients dont le plus connu est la chaptalisation, qui consiste à rajouter du sucre avant fermentation, pour atteindre le degré d'alcool requis. Ce traitement crée de toute façon un déséquilibre entre les différents constituants du vin.

L'invention permet, entre autres, de résoudre ces différents problèmes; elle résulte de recherches effectuées sur l'effet de la congélation des baies et fruits en vue de l'élaboration des moûts et jus concentrés.

On a déjà proposé de congeler des raisins, mais uniquement pour les conserver plusieurs mois avant de les pressurer. Cependant, les conditions du pressurage restaient tradititionnelles, c'est-à-dire à température normale. L'invention permet d'atteindre des résultats avantageux dans de nombreuses circonstances, notamment dans le cas de récolte difficile et/ou de qualité moyenne. L'idée de base de l'invention consiste à effectuer le pressurage à basse température.

Plus précisément, l'invention concerne un procédé d'obtention de moût ou jus concentré caractérisé par les phases opératoires consistant à congeler des baies ou fruits et à les presser à basse température. L'invention trouve son domaine d'application privilégié dans l'obtention des moûts de raisin.

Dans ce dernier cas, l'invention permet de résoudre les deux problèmes évoqués ci-dessus. Pour la production de vins liquoreux, surtout les vins blancs, le viticulteur confronté à des conditions météorologiques défavorables, et notamment à des pluies pendant la période de surmaturation, pourra procéder à la récolte des raisins gorgés d'eau de pluie et le pressurage à l'état congelé permettra d'obtenir un moût normal, l'eau en excès étant retenue sous forme de glace dans les résidus du pressurage. Pour ce qui concerne, par ailleurs, l'enrichissement de récoltes pauvres, l'adjonction de sucre pourra avantageusement être évitée en pressurant les grains à basse température avec une pression contrôlée pour sélectionner un moût enrichi susceptible, au prix d'une production légèrement moins abondante, de donner un vin entrant dans la catégorie des vins d'appellation.

On attribue cette propriété de la congélation des baies à sélectionner et enrichir les moûts au fait que, pour une température choisie comprise dans une gamme déterminée (-6° C à -15° C, d'après les expérimentations effectuées jusqu'à présent), les différentes baies d'un même raisin présentent des compressibilités différentes. ce qui permet une sélection des jus en fonction de leur richesse. Ainsi, lorsqu'une pression donnée (généralement comprise entre 0,2 et 8 bars) est exercée sur les raisins, on peut obtenir toute une gamme de jus correspondant aux différentes qualités des baies. Cette extraction fractionnée est aussi favorisée par le fait que le froid fragilise les cellules des baies et qu'ainsi on obtient un jus plus riche et proportionnellement plus abondant, au moment du pressurage. Ce procédé d'extraction fractionnée est notamment applicable chaque fois que le vendange n'arrive pas à une maturation complète. On a pu particulièrement expérimenter que cette extraction fractionnée et cette concentration naturelle des moûts permettaient d'obtenir des vins blancs secs de bien meilleure qualité. Le procédé permet ainsi, en toutes circonstances, de satisfaire les normes définies dans le cadre des appellations contrôlées, pour au moins une partie notable de la production, en évitant la chaptalisation, c'est-à-dire sans déséquilibrer les rapports entre les différents constituants du vin. En outre, contrairement aux autres techniques connues d'enrichissement où les moûts sont chauffés, le procédé permet de conserver tous les précurseurs d'arômes, c'est-à-dire tous les constituants qui donneront ultérieurement. après fermentation, les caractéristiques arômatiques habituelles du vin considéré.

Enfin, il convient de noter que l'effet de la congélation sur les pellicules des raisins rouges a pour conséquence favorable de permettre de contrôler naturellement la coloration des vins rouges résultants.

L'invention sera mieux comprise grâce aux exemples d'expérimentations réelles qui vont être développés ci-dessous. en référence à des tableaux comparatifs.

Exemple 1 : Obtention de vins liquoreux à partir de raisins surmûris.

Le tableau I montre le résultat d'essais concordants effectués d'une part à l'échelle d'un équipement de laboratoire (1 hectolitre) et d'autre part à l'échelle industrielle d'un chai, c'est-à-dire avec un pressoir de 22 à 30 hl et des cuves de plus de 6 hl. Une certaine quantité de la même récolte de raisins n'a pas été soumise au traitement de congélation, pour fournir des informations comparatives. Les résultats concernant ces raisins non traités sont explicités dans les colonnes "témoin". Les résultats du procédé sont explicités dans les colonnes "moût sélectionné".Dans ces essais comparatifs, la pression de pressurage est la même; seule la température T des raisins au moment du pressurage a été modifiée.

La basse température des raisins au moment du pressurage implique que tout le moût n'est pas extrait en une seule fois, le moût effectivement extrait à la température considérée est le "moût sélectionné". Les compositions des moûts sélectionnés pour les quatre températures choisies montrent tout l'intérêt du procédé. La richesse en sucre est considérablement et naturellement accrue. Le titre alcoométrique probable (si tout le sucre donnait lieu à alcool. après fermentation) en est ainsi très sensiblement renforcé par rapport au témoin. Le pourcentage de moût sélectionné reste important, de 60 à 79 %, de sorte que la quantité de vin produit reste appréciable malgré la mise en oeuvre du procédé d'enrichissement. En outre, on peut vérifier que les taux d'acidité totale (en grammes par litre, d'acide sulfurique) et la proportion totale d'anions (acides + sels, exprimée en milliéquivalents/litre) n'augmente pas dans des proportions notables par rapport au témoin, et reste en tous cas dans les limites d'un vin de haute qualité.

Le tableau II exprime les caractéristiques de vins obtenus après fermentation de moûts sélectionnés. On constate que les taux d'acidité totale et d'acidité volatile (ce dernier étant aussi conventionnellement exprimé en grammes par litre, d'acide sulfurique) restent dans les limites d'un vin de qualité. L'extrait sec réduit (matière sèche du vin sans les sucres) exprimé en grammes par litre, est important, de même que la proportion de "cendres" qui représente la proportion de matières minérales dans le vin et traduit donc l'enrichissement de l'ensemble des constituants minéraux. Les deux dernières colonnes indiquent respectivement les taux d'alcool et de sucre résiduel.

Les résultats donnés au tableau I traduisent explicitement l'enrichissement obtenu. Certains chiffres, et notamment le taux d'alcool important, s'expliquent par le fait que les essais ont été effectués avec des raisins surmûris de bonne qualité. Des raisins surmûris gorgés d'eau (cas défavorable envisagé ci-dessus) auraient ainsi donné un vin de haute qualité, avec un taux d'alcool normal. Au contraire, le tableau II donne des résultats obtenus à partir d'une récolte de degré potentiel limité (inférieure à 14°).

Exemple 2 : Enrichissement d'un moût destiné à la production d'un vin sec à partir de raisins non surmûris.

Le tableau III a été établi dans les mêmes conditions que le tableau I. Il montre les résultats comparatifs pour un pressurage partiel d'un moût de vin sec à une température de -7,5° C. Le témoin provient de la même récolte de raisins. On note les mêmes phénomènes d'enrichissement du moût pressé à basse température, dans des limites plus réduites.

Si on poursuivait le pressurage en récupérant le moût libéré à température ambiante, on constaterait alors une quantité totale de sucre extrait plus importante que si les raisins avaient été pressés à température normale sans congélation préalable. Les raisins libèrent donc globalement leurs constituants de façon plus complète. Le froid qui diminue la résistance des tissus et favorise la formation de microcristaux à l'intérieur des cellules en est la cause.

Dans tous les cas, on observe un gain aromatique important. On peut penser que ce résultat provient de ce que beaucoup de composants qui caractérisent le vin proviennent des peaux et que ces peaux, fragilisées par le froid, libèrent plus complètement ces composants.

L'invention n'est pas limitée à l'obtention des moûts de raisin, ni même à l'obtention de moûts d'autres fruits en vue de la production de boissons alcoolisées. On peut aussi mettre en oeuvre le pressurage à basse température pour obtenir des jus de fruit et/ou des extraits aromatiques très renforcés. On a en effet pu constater que de nombreux fruits pressés dans ces conditions pouvaient donner des jus non destinés spécifiquement à la fermentation mais pouvant au contraire être utilisés dans l'industrie alimentaire pour "parfumer" certains produits tels que notamment des sirops ou des produits laitiers (yaourts, crèmes glacées). etc... De tels concentrés aromatiques peuvent ainsi remplacer avantageusement les concentrés de synthèse. A titre d'exemples non limitatifs. on a expérimenté le procédé de l'invention avec succès sur la fraise. l'orange. la pomme, la poire, le citron. le cassis... Dans tous les cas, on obtient un concentré plus riche de tous les composants du fruit.

3

TABLEAU I

| T* | Richesse en sucres (g/1) | | Titre alcoométrique probable (%vol.) | | % de moût sélectionné par rapport au volume total de moût disponible | Acidité totale (g/1 $H_2SO_4$) | | Anions totaux (milliéquivalents/1) | |
|---|---|---|---|---|---|---|---|---|---|
| | Témoin | Moût sélectionné | Témoin | Moût sélectionné | | Témoin | Moût Sélectionné | Témoin | Moût Sélectionné |
| - 15°C | 298 | 410 | 17,5 | 24,0 | 60 | 3,3 | 3,7 | 68 | 76 |
| - 11°C | 280 | 406 | 16,4 | 23,8 | 67 | 2,8 | 3,5 | 74 | 80 |
| - 8,5°C | 280 | 363 | 16,4 | 21,3 | 69 | 2,7 | 3,3 | 70 | 96 |
| - 6,5°C | 280 | 343 | 16,4 | 20,2 | 79 | 2,7 | 2,8 | 76 | 74 |

*Température des raisins au moment du pressurage.

0 228 970

TABLEAU II

| Vin | Acidité totale (g/l $H_2SO_4$) | Acidité volatile (g/l $H_2SO_4$) | Extrait sec réduit (g/l) | Cendres (g/l) | Alcool acquis (% vol.) | Sucres (g/l) |
|---|---|---|---|---|---|---|
| n° 1 | 3,8 | 0,78 | 45,5 | 6,27 | 14,5 | 94 |
| n° 2 | 3,4 | 0,22 | 22,6 | 2,37 | 14,8 | 33 |
| n° 3 | 3,6 | 0,49 | 27,1 | 2,75 | 14,2 | 40 |
| n° 4 | 3,8 | 0,74 | 40,5 | 4,95 | 13,7 | 93 |

TABLEAU III

| Moût | Richesse en sucres (g/l) | Titre alcoométrique probable (% vol.) | % du moût sélectionné par rapport au volume total du moût disponible | Acidité totale (g/l $H_2SO_4$) | Cations totaux milliéquivalents/l |
|---|---|---|---|---|---|
| Témoin | 206 | 12,0 | – | 3,3 | 48 |
| Moût sé-lectionné à -7,5°C | 264 | 15,5 | 74 | 3,6 | 62 |

0 228 970

## Revendications

1. Procédé d'obtention de moût ou jus concentré. caractérisé par les phases opératoires consistant à congeler des baies ou fruits et à les pressurer à basse température.

2. Procédé selon la revendication 1. particulièrement pour la production de vins liquoreux à partir de raisins surmûris, caractérisé en ce qu'il consiste à récolter lesdits raisins surmûris éventuellement surchargés d'eau de pluie pour éviter leur dégradation complète, à congeler ces raisins surmûris et surchargés d'eau et à les pressurer à une basse température.

3. Procédé selon la revendication 1, particulièrement pour la production de vins secs, caractérisé en ce qu'il consiste à pressurer les grains de raisin à basse température en contrôlant la pression pour sélectionner un moût enrichi.

4. Procédé selon l'une des revendications précédentes, caractérisé en ce que la température pendant le pressurage est comprise entre -6°C et -15°C.

5. Procédé selon la revendication 1, caractérisé en ce qu'il est appliqué à des fruits pour la production de jus concentré.

7

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| X | DIE WEINWIRTSCHAFT, no. 34/35, 29 août 1975, pages 982-984, DE; G. WÜRDIG et al.: "Versuche zur Eisweinbereitung" * Page 982, colonne 2, dernier alinéa; page 983, colonne 2, alinéas 2,4; page 984, colonne 1, alinéa 1; page 984, tableaux * | 1-4 | C 12 G 1/02 |
| | --- | | |
| A | INTERNATIONAL JOURNAL OF REFRIGERATION, vol. 1, no. 1, mai 1978, page 11, IPC Business Press Ltd; "Congélation des raisins destinés à la vinification" * Page 11, colonne 2, dernier alinéa; page 11, colonne 3 * | 1-4 | |
| | ----- | | DOMAINES TECHNIQUES RECHERCHES (Int. Cl.4) C 12 G |

Le présent rapport de recherche a été établi pour toutes les revendications

| Lieu de la recherche | Date d'achèvement de la recherche | Examinateur |
|---|---|---|
| LA HAYE | 18-02-1987 | COUCKE A.O.M. |